Europäisches Patentamt

European Patent Office

Office européen des brevets

(19)

(11) Publication number : **0 453 180 B1**

(12) **EUROPEAN PATENT SPECIFICATION**

(45) Date of publication of patent specification :
12.07.95 Bulletin 95/28

(51) Int. Cl.⁶ : **H02M 3/335, H04N 3/185**

(21) Application number : **91303201.7**

(22) Date of filing : **11.04.91**

(54) Stabilized power supply circuit.

(30) Priority : **17.04.90 JP 101425/90**

(43) Date of publication of application :
**23.10.91 Bulletin 91/43**

(45) Publication of the grant of the patent :
**12.07.95 Bulletin 95/28**

(84) Designated Contracting States :
**DE ES FR GB**

(56) References cited :
**WO-A-84/03183
US-A- 3 970 780
US-A- 4 069 449
IBM TECHNICAL DISCLOSURE BULLETIN vol.
26, no. 7B, December 1983, NEW YORK pages
3829 - 3832; MORRISH: 'EHT regulator output
stage'**

(73) Proprietor : **SHARP KABUSHIKI KAISHA
22-22 Nagaike-cho
Abeno-ku
Osaka-shi Osaka-fu (JP)**

(72) Inventor : **Shirakawa, Masaru
174-7 Hayakawa-cho
Yaita-shi, Tochigi-ken (JP)**

(74) Representative : **Brown, Kenneth Richard et al
R.G.C. Jenkins & Co.
26 Caxton Street
London SW1H 0RJ (GB)**

## Description

### BACKGROUND OF THE INVENTION

#### Field of the Invention

The present invention relates generally to stabilized power supply circuits and, more particularly, to a stabilized power supply circuit for stabilizing an applied non-stabilized direct current (DC) voltage by employing controllable switching elements. The invention has a particular applicability to a stabilized power supply circuit for applying a stabilized direct current voltage to a horizontal output circuit of a television receiver.

### DESCRIPTION OF THE BACKGROUND ART

The present invention is widely applicable to a stabilized power supply circuit for receiving a non-stabilized direct current voltage obtained by rectifying an alternating current (AC) power supply voltage, to supply a stabilized direct current voltage to load. As an example, a description will now be made of the case of application to a stabilized power supply circuit for supplying a stabilized direct current voltage to a horizontal output circuit in a television receiver.

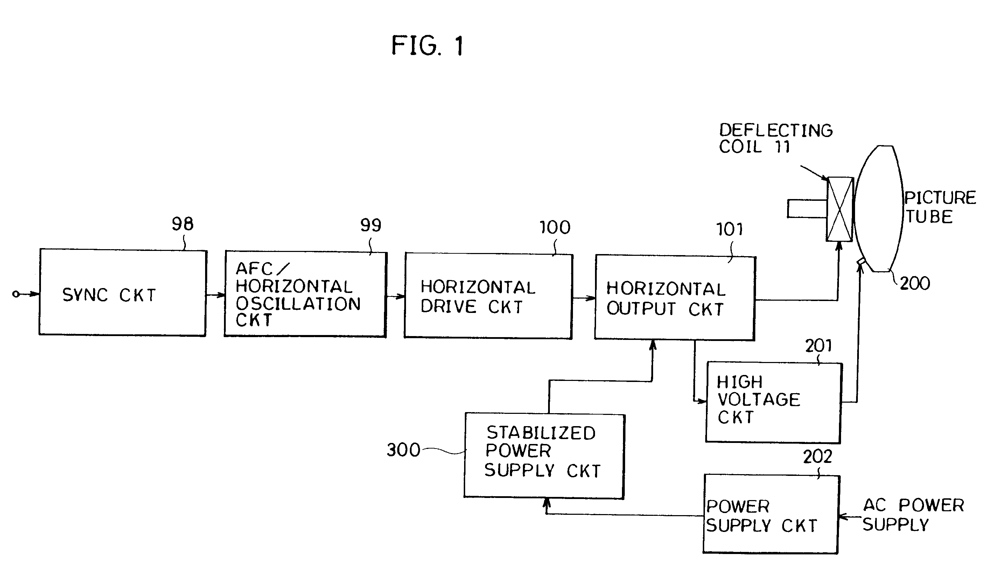

Fig. 1 is a block diagram of a conventional horizontal deflection circuit in the television receiver. Referring to Fig. 1, this horizontal deflection circuit includes a synchronous AFC and horizontal oscillation circuit 99 operable in response to a synchronizing circuit 98, a horizontal drive circuit 100, and a horizontal output circuit 101 for supplying a sawtooth current to a horizontal deflecting coil 11. A power supply circuit 202 rectifies a supplied AC power supply voltage to generate a non-stabilized DC voltage as a direct current power supply voltage. This non-stabilized DC power supply voltage is applied to a stabilized power supply circuit 300. The stabilized DC voltage is applied to horizontal output circuit 101. A high voltage circuit 201 generates a high voltage in response to so-called collector pulses generated from horizontal output circuit 101 and then supplies the generated high voltage to an anode of a picture tube 200.

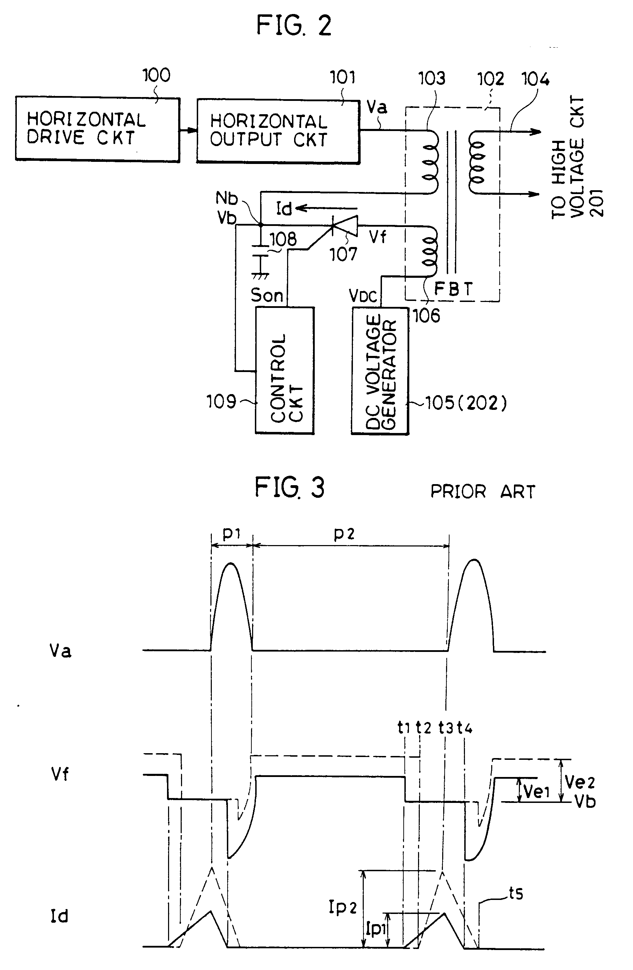

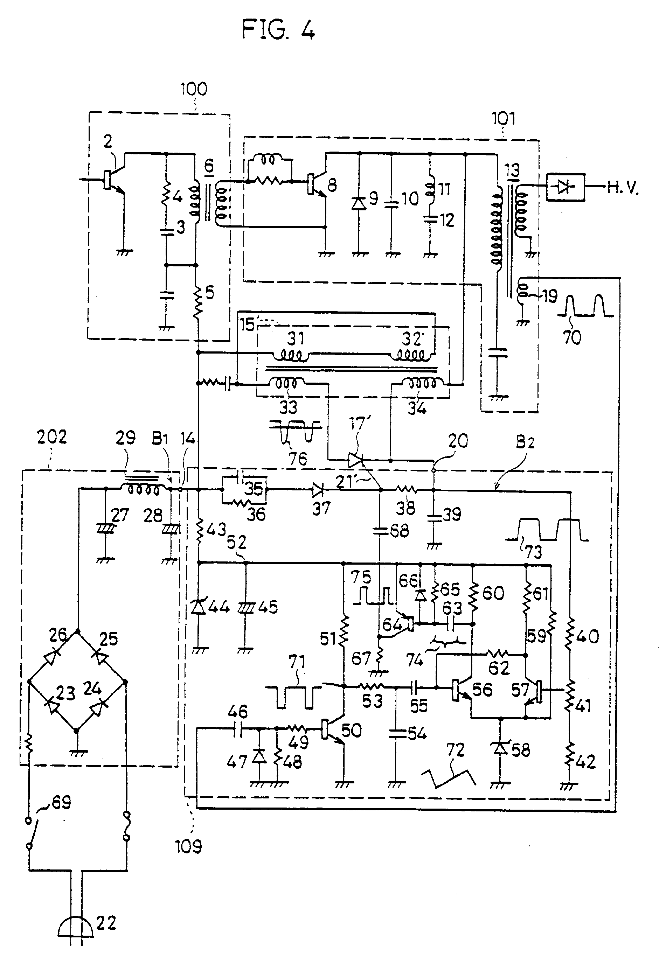

Fig. 2 is a circuit block diagram of the conventional stabilized power supply circuit shown in Fig. 1. The circuit configuration shown in Fig. 2 is illustrated in further detail in Fig. 4. Fig. 4 is a circuit diagram of a conventional horizontal deflection circuit, which is disclosed in U.S. Patent No. 3,970,780. Referring to Fig. 2, a DC voltage generating circuit 105 generates a non-stabilized DC voltage $V_{DC}$. That is, DC voltage generating circuit 105 corresponds to the circuit 202 shown in Fig. 4 and serves to output the non-stabilized DC voltage $V_{DC}$ by rectifying the AC power supply voltage. The DC voltage $V_{DC}$ generated from DC voltage generating circuit 105 often varies, i.e., becomes unstable due to an increase or decrease in load connected to DC voltage generating circuit 105 or due to variations in the AC power supply voltage. Accordingly, a stabilizing circuit including a flyback transformer (FBT) 102, a silicon controlled rectifier (SCR) 107 and a smoothing capacitor 108 receives the unstable DC voltage to supply a stabilized DC voltage to horizontal output circuit 101.

Horizontal output circuit 101 responds to a drive signal applied from horizontal drive circuit 100 to supply a deflection current to the horizontal deflecting coil (denoted with the reference numeral 11 of Fig. 1) and apply so-called horizontal collector pulses Va to one terminal of a primary winding 103 of flyback transformer 102. A secondary winding 106 has one terminal connected to receive the non-stabilized DC voltage $V_{DC}$ from DC voltage generating circuit 105. Secondary winding 106 serves to superimpose or add horizontal collector pulses with a negative polarity onto the DC voltage $V_{DC}$ by electromagnetic coupling. Thus, a voltage Vf is output through the other terminal of secondary winding 106 and then applied to an anode of SCR 107. The horizontal collector pulses Va, voltage Vf and a current Id flowing through SCR 107 are illustrated in a waveform diagram of Fig. 3.

A capacitor 108 for smoothing is connected between a cathode of SCR 107 and ground. Accordingly, a cathode voltage of SCR 107 is first smoothed by capacitor 108. A smoothed voltage Vb is thereafter applied to the other terminal of primary winding 103. The voltage Vb is already stabilized and hence applied as a stabilized DC voltage via primary winding 103 to horizontal output circuit 101. A control circuit 109 responds to variations of the stabilized DC voltage Vb to control conduction timing of SCR 107. Nonconduction timing of SCR 107 is determined in response to the negative polarity pulses included in the voltage Vf, which are superimposed by secondary winding 106.

A more detailed description will now be given on an operation of this stabilized power supply circuit with reference to Fig. 3. Horizontal collector pulses Va are periodically generated in a horizontal blanking period P1. A period P2 indicates a horizontal scanning period. First, control circuit 109 generates a signal Son (not shown) for rendering SCR 107 conductive at a time t1. Accordingly, SCR 107 is turned on at time t1, so that the current Id starts flowing through SCR 107. The current Id attains a maximum value Ip1 at a time t3 when horizontal scanning period p2 ends. The voltage Vf falls in response to the superimposed negative polarity pulses at a time t4, so that SCR 107 becomes nonconductive in response to a falling edge thereof. This causes a decrease in the current Id and thus renders SCR 107 nonconductive. After time t4, SCR 107 is kept in an OFF state until the next conduction control signal Son is applied from control circuit 109. After the application of the next conduction control signal Son, the same operation as the one described above repeats.

When the voltage Vb applied to load, i.e., horizontal output circuit 101 in this example varies, control circuit 109 serves to control the timing of generating conduction control signal Son so as to stabilize the voltage Vb. More specifically, since a conduction period of SCR 107 is controlled depending on the variation of the load, a constant and stabilized voltage Vb can be applied to the load (horizontal output circuit 101). The feature to be noted in the foregoing operation is that the maximum value Ip1 of the current Id is determined depending on a voltage difference Ve1 between the anode and the cathode of SCR 107. The voltage difference Ve1 is defined as the difference between a stabilized DC voltage level Vb and the voltage Vf as shown in Fig. 3. In other words, as the voltage difference Ve1 becomes increased, the maximum value Ip1 of the current Id flowing through SCR 107 also becomes increased.

Currently, television receivers incorporating picture tubes are available on the market. Thus, in such a television receiver, load such as horizontal output circuit 101 is increased. With the increase of the load, a power supply current supplied from the stabilized power supply circuit is also increased. In other words, the current Id flowing through SCR 107 shown in Fig. 2 becomes increased, and the maximum value Ipl of the current Id becomes increasingly higher. In another example, the television receivers incorporating such stabilized power supply circuits are exported to other countries where higher AC power supply voltages for commercial use are used. In the United States and Europe, for example, AC power supply voltages higher than those for use in Japan are used (e.g., AC120, 220, 240V, etc.), and hence the voltage $V_{DC}$ generated from DC voltage generating circuit 105 shown in Fig. 2 becomes higher. Consequently, the voltage difference Ve1 between the anode and the cathode of SCR 107 increases, resulting in such disadvantages as follows.

With the DC voltage $V_{DC}$ rising, the voltage Vf has a higher level as shown by dotted lines in Fig. 3. Accordingly, since the voltage difference between the anode and the cathode of SCR 107 increases from Vel to Ve2, a maximum value Ip2 of the current Id also becomes higher than the maximum value Ip1. In general, the current Id flowing through SCR 107 is expressed as follows as a function of the voltage difference Ve between the anode and the cathode of SCR 107:

$$Id = Ve/L \cdot t \quad (1)$$

where L indicates inductance of winding 106, and t indicates a conduction time length of SCR 107.

Therefore, it is understood that with the voltage difference Ve increased, a still higher maximum value of the current Id is provided. It is noted that with the increase in the maximum value of the current Id, a longer time period is required for the current Id to attain a 0 level. In the example shown in Fig. 3, the current Id attains the 0 level at a time t5. That is to say, OFF timing of SCR 107 is delayed. If the OFF timing of SCR 107 is delayed more than a certain limit time length, then this stabilized power supply circuit is rendered uncontrollable, leading to malfunction of the television receiver.

SUMMARY OF THE INVENTION

One object of the present invention is to prevent occurrence of erroneous operation of a stabilized power supply circuit due to a rising of an applied non-stabilized DC voltage.

Another object of the present invention is to prevent occurrence of erroneous operation of a television receiver due to a rising of an applied non-stabilized DC voltage to a stabilized power supply circuit thereof.

In one aspect, the present invention provides the stabilized power supply circuit defined by claim 1.

Preferred embodiments of the invention are disclosed in claims 2-7.

In another aspect, the present invention provides the television receiver defined by claim 8.

In operation, since the at least two controllable switching elements are connected in series between the non-stabilized direct current voltage source and the load, the voltages across the respective switching elements decrease. More specifically, even if a non-stabilized direct current voltage having a higher level is supplied, since a plurality of switching elements (whose number is determined in dependence on the level of the supplied voltage) are connected in series, the supplied non-stabilized direct current voltage is divided. Thus, the divided voltages are applied across the respective switching elements. As a result, a maximum value of a conduction current flowing through the switching elements decreases, thereby avoiding delays in OFF timing of the switching elements. That is, the occurrence of erroneous operation in the stabilized power supply circuit is avoided.

BRIEF DESCRIPTION OF THE DRAWINGS

Fig. 1 is a block diagram of a conventional horizontal deflection circuit in a television receiver;

Fig. 2 is a circuit block diagram of a conventional stabilized power supply circuit shown in Fig. 1;

Fig. 3 is a signal waveform diagram for use in explaining an operation of the stabilized power supply circuit shown in Fig. 2;

Fig. 4 is a circuit diagram of the conventional horizontal deflection circuit;

Fig. 5 is a circuit block diagram of a stabilized power supply circuit showing one embodiment of the present invention;

Fig. 6 is a signal waveform diagram for use in explaining an operation of the circuit shown in Fig. 5;

Fig. 7 is a circuit block diagram of a stabilized power supply circuit showing another embodiment of the present invention; and

Fig. 8 is a circuit block diagram of a stabilized power supply circuit showing still another embodiment of the present invention.

## DESCRIPTION OF THE PREFERRED EMBODIMENTS

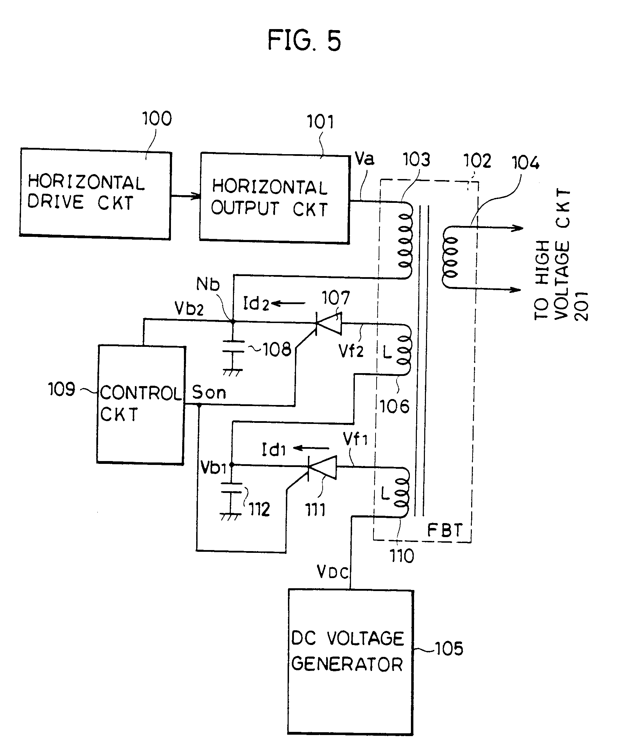

The stabilized power supply circuit of Fig. 5 differs from the conventional circuit of Fig. 2 in the following points. An additional stabilizing circuit is connected to one terminal of secondary winding 106 of flyback transformer 102. That is, another secondary winding 110 included in flyback transformer 102 has its one terminal connected to receive a non-stabilized DC voltage $V_{DC}$ generated from DC voltage generating circuit 105. Secondary winding 110 has the other terminal connected with an anode of an additional SCR 111. A cathode of SCR 111 is connected to the one terminal of secondary winding 106. A smoothing capacitor 112 is connected between the cathode of SCR 111 and ground. SCR 111 has its gate connected to receive a conduction control signal Son generated from control circuit 109. Accordingly, a DC voltage Vb1 stabilized by the additional stabilizing circuit including winding 110, SCR 111 and capacitor 112 is supplied to the conventionally provided stabilizing circuit. It is assumed that winding 110 has inductance L of the same value as that of winding 106.

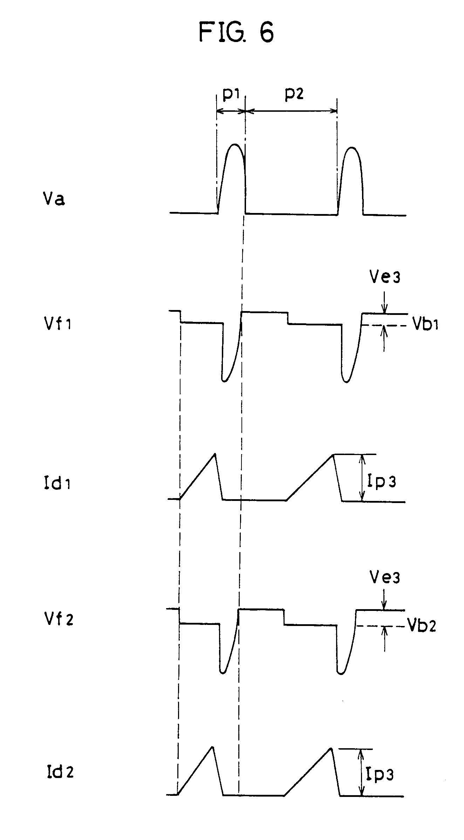

A description will now be made on an operation of the circuit shown in Fig. 5, with reference to Fig. 6. As can be seen in Fig. 5, two SCRs 107 and 111 are connected in series and forward biased between DC voltage generating circuit 105 and horizontal output circuit 101 serving as load. These SCRs 107 and 111 are turned on at the same time in response to the conduction control signal Son generated from control circuit 109. In addition, since negative polarity pulses based on horizontal collector pulses Va are superimposed onto anode voltages Vf1 and Vf2 of the SCRs by two secondary windings 110 and 106, SCRs 107 and 111 are turned off simultaneously. Since SCRs 107 and 111 are connected in series, a potential difference between a stabilized DC voltage Vb2 applied to horizontal output circuit 101 and a non-stabilized DC voltage $V_{DC}$ is divided by SCRs 107 and 111. More specifically, a voltage difference Ve3 of one half the value of the voltage difference between the anode and the cathode of SCR 107 shown in Fig. 2 is applied between the respective anodes and the respective cathodes of SCRs 107 and 111. Accordingly, respective maximum values Ip3 of currents Id2 and Id1 flowing through respective SCRs 107 and 111 decrease to one half of the maximum value of the current Id flowing through SCR 107 shown in Fig. 2. Since the respective maximum values of the respective currents Id2 and Id1 flowing through SCRs 107 and 111 decrease to a half value thereof, the time required for the currents Id2 and Id1 to attain the zero level is shortened. In other words, the delay in the OFF timing of SCRs 107 and 111 can be avoided. Consequently, SCRs 107 and 111 are not kept conductive exceeding an allowable limit time, thereby avoiding the occurrence of erroneous operations in this stabilized power supply circuit.

The description has been made on the stabilized power supply circuit employing two combinations of the secondary windings of flyback transformer 102, the SCRs and the capacitors in the embodiment shown in Fig. 5; however, it should be noted that it may be easy for those skilled in the art to further add such a combination in association with the level of the non-stabilized DC voltage $V_{DC}$ generated from DC voltage generating circuit 105. That is, even if a still higher non-stabilized DC voltage $V_{DC}$ is supplied, since an additional SCR is further connected in series between DC voltage generating circuit 105 and horizontal output circuit 101 serving as load, maximum values of the respective currents flowing through the respective SCRs can be decreased.

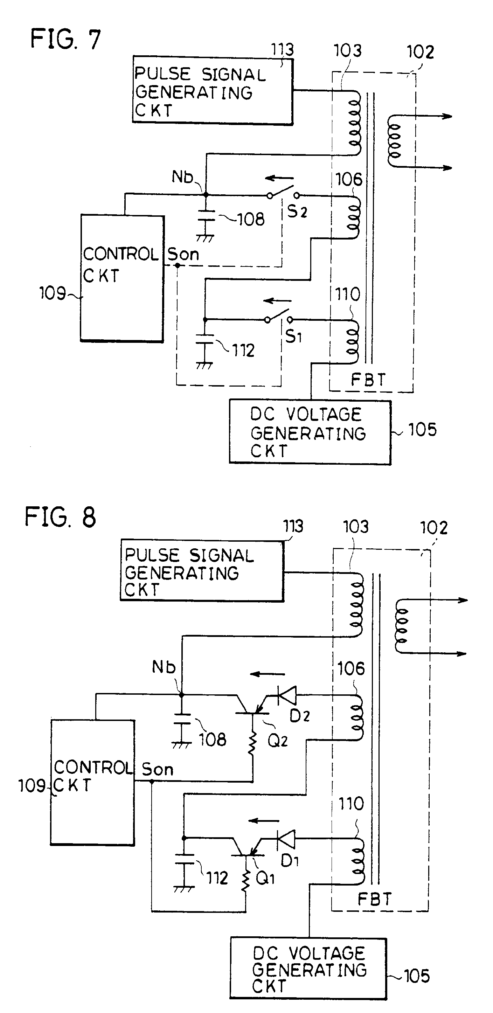

While the present invention is applied to the stabilized power supply circuit for supplying the stabilized DC voltage to horizontal output circuit 101 in the television receiver in the embodiment of Fig. 5, it is noted that the present invention is not limited to this application and can be widely applied to stabilized power supply circuits employed in other electrical apparatus. More specifically, Fig. 7 shows another embodiment of the present invention, in which a circuit 113 for generating a pulse signal having a predetermined frequency is provided in place of horizontal output circuit 101 of Fig. 5. Switching elements S1 and S2 are provided in place of SCRs 111 and 107. Pulse signal generating circuit 113 generates pulses for determining OFF timing of switching elements S1 and S2. A stabilized DC voltage is outputted through an output node Nb.

A further embodiment of the present invention is shown in Fig. 8. Referring to Fig. 8, switching elements S1 and S2 of Fig. 7 are replaced by pnp transistors Q1 and Q2 and diodes D1 and D2. Transistors Q1 and Q2 have their respective bases connected to receive conduction control signals Son generated from control circuit 109. It is noted that the stabilized power supply circuit of Fig. 8 also operates in the same manner and provides the same advantages as the circuit shown in Fig. 5.

As described above, since the stabilized power supply circuit includes a plurality of or at least two switching controllable diode elements (SCRs) 107 and 111 connected in series and forward biased between non-stabilized DC voltage generating circuit 105 and load 101, maximum values of currents flowing upon the conduction of the respective elements are decreased. That is to say, an increase in number of switching controllable diode elements in association with an increase in level of the non-stabilized DC voltage $V_{DC}$ can inhibit an increase in peak currents flowing through the respective elements. Accordingly, the currents flowing through the switching controllable diode elements can rapidly attain the zero level, thereby preventing this stabilized power supply circuit from being rendered incontrollable. In other words, the occurrence of malfunctions in the television receiver can be avoided.

## Claims

1. A stabilized power supply circuit for receiving a non-stabilized direct current voltage from a non-stabilized direct current voltage source and generating therefrom a stabilized direct current voltage for supply to a load, comprising:

   at least two controllable switching elements (107, 111), arranged in series connection between the non-stabilized direct current voltage source and the load, and a respective smoothing means (108,112) connected to each said controllable switching element for smoothing an output voltage of the controllable switching element;

   pulse signal generating means (101) for generating a pulse signal during a predetermined period;

   pulse signal superimposing means (102), connected to said controllable switching elements, for superimposing pulses generated by said pulse signal generating means onto direct current voltages applied respectively to said controllable switching elements to produce a superimposed pulse signal, said controllable switching elements being rendered non-conductive simultaneously in response to said superimposed pulse signal being applied to the switching elements simultaneously; and

   timing control means (109), responsive to the direct current voltage supplied to the load, for controlling conduction timing of said controllable switching elements and arranged so as to render said controllable switching elements conductive at the same time.

2. A stabilized power supply circuit according to claim 1, wherein:

   said pulse signal superimposing means comprises a transformer (102) which includes an input winding (103) and two output windings (106, 110),

   said transformer having said input winding connected to said pulse signal generating means and having said two output windings connected respectively to said two controllable switching elements between the non-stabilized direct current voltage source and the load.

3. A stabilized power supply circuit according to claim 1 or claim 2, wherein:

   said two controllable switching elements include two silicon controlled rectifiers (107, 111) arranged in forward-biased series connection between the non-stabilized direct current voltage source and the load,

   said two silicon controlled rectifiers having respective gates connected to said timing control means to receive control signals for controlling conduction timing.

4. A stabilized power supply circuit according to claim 1 or claim 2, wherein said two controllable switching elements include:

   two diodes (D1, D2) arranged in forward-biased series connection between the non-stabilized direct current voltage source and the load; and

   two switching devices (Q1, Q2), each connected to a respective one of said two diodes and controlling current flow therethrough,

   said two switching devices being connected to said timing control means to receive control signals for turning said devices on.

5. A stabilized power supply circuit according to any one of the preceding claims, wherein:

   said pulse signal generating means includes a horizontal output circuit (101), responsive to a horizontal synchronizing signal, for outputting pulses during a horizontal blanking period.

6. A stabilized power supply circuit according to claim 5, wherein said horizontal output circuit (101) constitutes the load to which said stabilized direct current voltage is supplied.

7. A stabilized power supply circuit according to any one of the preceding claims, comprising a number of said controllable switching elements arranged in series connection between the non-stabilized direct current voltage source and the load, the number of switching elements being determined by the level of the non-stabilized direct current voltage generated by the non-stabilized direct current voltage source.

8. A television receiver comprising:

   a non-stabilized direct current voltage source (105) which generates a non-stabilized direct current voltage; and

a stabilized power supply circuit, coupled to said non-stabilized direct current voltage source for generating from said non-stabilized direct current voltage a stabilized direct current voltage for supply to a load,

said stabilized power supply circuit comprising:

a plurality of controllable switching elements (107, 111) arranged in series connection between said non-stabilized direct current voltage source and the load, and a respective smoothing means (108,112) connected to each said controllable switching element for smoothing an output voltage of the controllable switching element;

pulse signal generating means (101) for generating a pulse signal during a predetermined period;

pulse signal superimposing means (102), connected to said plurality of controllable switching elements, for superimposing pulses generated by said pulse signal generating means onto direct current voltages applied respectively to said controllable switching elements to produce a superimposed pulse signal, said plurality of controllable switching elements being rendered nonconductive simultaneously in response to said superimposed pulse signal being applied to the switching elements simultaneously; and

timing control means (109), responsive to the direct current voltage applied to the load, for controlling conduction timing of said plurality of controllable switching elements and arranged so as to render said plurality of controllable switching elements conductive at the same time.

**Patentansprüche**

1.  Stabilisierte Spannungsversorgungsschaltung, die eine nichtstabilisierte Gleichspannung von einer nichtstabilisierten Gleichspannungsquelle erhält und daraus eine stabilisierte Gleichspannung zur Versorgung einer Last erzeugt, mit:
    - mindestens zwei steuerbaren Schaltelementen (107, 111), die in Reihenschaltung zwischen die nichtstabilisierte Gleichspannungsquelle und die Last geschaltet sind, und einer jeweiligen Glättungseinrichtung (108, 112), die mit jedem steuerbaren Schaltelement verbunden ist, um die Ausgangsspannung des steuerbaren Schaltelements zu glätten;
    - einer Impulssignal-Erzeugungseinrichtung (101) zum Erzeugen eines Impulssignals während einer vorgegebenen Zeitspanne;
    - einer Impulssignal-Überlagerungseinrichtung (102), die mit den steuerbaren Schaltelementen verbunden ist, um von der Impulssignal-Erzeugungseinrichtung erzeugte Impulse den jeweils an die steuerbaren Schaltelementen angelegten Gleichspannungen zu überlagern, um ein überlagertes Impulssignal zu erzeugen, wobei die steuerbaren Schaltelemente dann gleichzeitig nichtleitend geschaltet werden, wenn das überlagerte Impulssignal gleichzeitig an die Schaltelemente angelegt wird; und
    - einer Zeitregelungseinrichtung (109), die auf die an die Last angelegte Gleichspannung anspricht, um den Leitungszeitraum der steuerbaren Schaltelemente zu regeln, und die so ausgebildet ist, daß sie die steuerbaren Schaltelemente gleichzeitig leitend schaltet.

2.  Stabilisierte Spannungsversorgungsschaltung nach Anspruch 1, bei der:
    - die Impulssignal-Überlagerungseinrichtung einen Transformator (102) mit einer Eingangswicklung (103) und zwei Ausgangswicklungen (106, 110) beinhaltet;
    - wobei die Eingangswicklung des Transformators mit der Impulssignal-Erzeugungseinrichtung verbunden ist und wobei die zwei Ausgangswicklungen jeweils mit den zwei steuerbaren Schaltelementen zwischen der nichtstabilisierten Gleichspannungsquelle und der Last verbunden sind.

3.  Stabilisierte Spannungsversorgungsschaltung nach Anspruch 1 oder Anspruch 2, bei der:
    - die zwei steuerbaren Schaltelementen zwei siliziumgesteuerte Gleichrichter (107, 111) umfassen, die in Reihe in Durchlaßrichtung zwischen die nichtstabilisierte Gleichspannungsquelle und die Last geschaltet sind;
    - wobei die jeweiligen Gates der zwei siliziumgesteuerten Gleichrichter mit der Zeitregelungseinrichtung verbunden sind, um Steuersignale zum Regulieren des Leitungszeitraums zu empfangen.

4.  Stabilisierte Spannungsversorgungsschaltung nach Anspruch 1 oder Anspruch 2, bei der die zwei steuerbaren Schaltelemente folgendes umfassen:
    - zwei Dioden (D1, D2), die in Reihenschaltung in Durchlaßrichtung zwischen die nichtstabilisierte Gleichspannungsquelle und die Last geschaltet sind; und
    - zwei Schaltbauteile (Q1, Q2), die jeweils mit einer jeweiligen der zwei Dioden verbunden sind und den Stromfluß durch diese steuern;
- wobei die zwei Schaltbauteile mit der Zeitregelungseinrichtung verbunden sind, um Steuersignale zum Einschalten der Bauteile zu empfangen.

5. Stabilisierte Spannungsversorgungsschaltung nach einem der vorstehenden Ansprüche, bei der die Impulssignal-Erzeugungseinrichtung eine Horizontalausgangsschaltung (101) beinhaltet, die auf ein Horizontalsynchronisiersignal anspricht, um Impulse während einer Horizontalaustastperiode auszugeben.

6. Stabilisierte Spannungsversorgungsschaltung nach Anspruch 5, bei der die Horizontalausgangsschaltung (101) die Last bildet, an die die stabilisierte Gleichspannung angelegt wird.

7. Stabilisierte Spannungsversorgungsschaltung nach einem der vorstehenden Ansprüche, mit einer Anzahl der genannten steuerbaren Schaltelemente, die in Reihenschaltung zwischen die nichtstabilisierte Gleichspannungsquelle und die Last geschaltet sind, wobei die Anzahl der Schaltelemente abhängig vom Pegel der von der nichtstabilisierten Gleichspannungsquelle er-zeugten nichtstabilisierten Gleichspannung fest-gelegt ist.

8. Fernsehempfänger mit:
- einer nichtstabilisierten Gleichspannungsquelle (105), die eine nichtstabilisierte Gleichspannung erzeugt; und
- einer stabilisierten Spannungsversor-gungsschaltung, die mit der nichtstabili-sierten Gleichspannungsquelle verbunden ist, um aus der nichtstabilisierten Gleich-spannung eine stabilisierte Gleichspan-nung zum Versorgen einer Last zu erzeu-gen;
- wobei die stabilisierte Spannungsversor-gungsschaltung folgendes aufweist:
- mehrere steuerbare Schaltelemente (107, 111), die in Reihenschaltung zwischen die nichtstabilisierte Gleichspannungsquelle und die Last geschaltet sind, und eine jeweilige Glättungseinrichtung (108, 112), die mit jedem steuerbaren Schaltelement verbunden ist, um die Ausgangsspannung des steuerbaren Schaltelements zu glätten;
- eine Impulssignal-Erzeugungseinrichtung (101) zum Erzeugen eines Impulssignals während einer vorgegebenen Periode;
- eine Impulssignal-Überlagerungseinrichtung (102), die mit den mehreren steuerbaren Schaltelementen verbunden ist, um der an die jeweiligen steuerbaren Schaltelemente angelegten Gleichspannung von der Impulssignal-Erzeugungseinrichtung erzeugte Impulse zu überlagern, um ein überlagertes Impulssignal zu erzeugen, wobei die mehreren steuerbaren Schaltelemente gleichzeitig nichtleitend geschaltet werden, wenn das überlagerte Impulssignal gleichzeitig an die Schaltelemente angelegt wird; und
- eine Zeitregelungseinrichtung (109), die auf die an die Last angelegte Gleichspannung anspricht, um den Leitungszeitraum der mehreren steuerbaren Schaltelemente zu steuern, und die so ausgebildet ist, daß sie die mehreren steuerbaren Schaltelemente gleichzeitig leitend schaltet.

**Revendications**

1. Circuit d'alimentation stabilisé destiné à recevoir une tension continue non stabilisée en provenance d'une source de tension continue non stabilisée, et à produire, à partir de cette tension, une tension continue stabilisée à fournir à une charge, comprenant:

au moins deux éléments de commutation commandables (107, 111), disposés, suivant un montage en série, entre la source de tension continue non stabilisée et la charge, et un moyen de lissage respectif (108, 112) relié à chaque élément de commutation commandable précité pour lisser la tension de sortie de l'élément de commutation commandable;

des moyens de génération de signal impulsionnel (101) pour générer un signal impulsionnel pendant une période prédéterminée;

des moyens de superposition de signal impulsionnel (102), reliés auxdits éléments de commutation commandables, pour superposer des impulsions générées par lesdits moyens de génération de signal impulsionnel à des tensions continues appliquées respectivement auxdits éléments de commutation commandables pour produire un signal impulsionnel superposé, lesdits éléments de commutation commandables étant rendus non conducteurs simultanément en réponse à l'application simultanée auxdits éléments de commutation dudit signal impulsionnel superposé; et

des moyens de commande de rythme (109), sensibles à la tension continue fournie à la charge, pour commander le rythme de conduction desdits éléments de commutation commandables et disposés de façon à rendre conducteurs en même temps lesdits éléments de commutation commandables.

2.   Circuit d'alimentation stabilisé selon la revendication 1, dans lequel:

lesdits moyens de superposition de signal impulsionnel comprennent un transformateur (102) qui comporte un enroulement d'entrée (103) et deux enroulements de sortie (106, 110), ledit enroulement d'entrée dudit transformateur étant relié auxdits moyens de génération de signal impulsionnel et lesdits deux enroulements de sortie dudit transformateur étant reliés respectivement auxdits deux éléments de commutation commandables entre la source de tension continue non stabilisée et la charge.

3.   Circuit d'alimentation stabilisé selon la revendication 1 ou la revendication 2, dans lequel:

lesdits deux éléments de commutation commandables comportent des redresseurs commandés au silicium (107, 111) disposés, suivant un montage série polarisé dans le sens direct, entre la source de tension continue non stabilisée et la charge, lesdits deux redresseurs commandés au silicium comportant des gâchettes respectives reliées auxdits moyens de commande de rythme pour recevoir des signaux de commande en vue de commander le rythme de la conduction.

4.   Circuit d'alimentation stabilisé selon la revendication 1 ou la revendication 2, dans lequel lesdits deux éléments de commutation commandables comportent:

deux diodes (D1, D2) disposées, suivant un montage en série polarisé dans le sens direct, entre la source de tension continue non stabilisée et la charge; et deux dispositifs de commutation (Q1, Q2) reliés chacun à une diode respective parmi lesdites deux diodes et commandant la circulation du courant à travers lesdites diodes, lesdits deux dispositifs de commutation étant reliés auxdits moyens de commande de rythme pour recevoir des signaux de commande servant à activer lesdits dispositifs.

5.   Circuit d'alimentation stabilisé selon l'une quelconque des revendications précédentes, dans lequel:

lesdits moyens de génération de signal impulsionnel comprennent un circuit de sortie horizontale (101), sensible à un signal de synchronisation horizontale pour délivrer en sortie des impulsions pendant une période de suppression horizontale.

6.   Circuit d'alimentation stabilisé selon la revendication 5, dans lequel ledit circuit de sortie horizontale (101) constitue la charge à laquelle ladite tension continue stabilisée est fournie.

7.   Circuit d'alimentation stabilisé selon l'une quelconque des revendications précédentes, comprenant un certain nombre desdits éléments de commutation commandables disposés, suivant un montage en série, entre la source de tension continue non stabilisée et la charge, le nombre d'éléments de commutation étant déterminé par le niveau de la tension continue non stabilisée générée par la source de tension continue non stabilisée.

8.   Récepteur de télévision comprenant:

une source de tension continue non stabilisée (105) qui génère une tension continue non stabilisée; et un circuit d'alimentation stabilisé, relié à ladite source de tension continue non stabilisée pour générer, à partir de ladite tension continue non stabilisée, une tension continue stabilisée à fournir à une charge, ledit circuit d'alimentation stabilisé comprenant:

une multiplicité d'éléments de commutation commandables (107, 111), disposés, suivant un montage en série, entre ladite source de tension continue non stabilisée et la charge, et un moyen de lissage respectif (108, 112) relié à chaque élément de commutation commandable précité pour lisser la tension de sortie de l'élément de commutation commandable;

des moyens de génération de signal impulsionnel (101) pour générer un signal impulsionnel pendant une période prédéterminée;

des moyens de superposition de signal impulsionnel (102), reliés à ladite multiplicité d'éléments de commutation commandables, pour superposer des impulsions générées par lesdits moyens de génération de signal impulsionnel à des tensions continues appliquées respectivement auxdits éléments de commutation commandables pour produire un signal impulsionnel superposé, ladite multiplicité d'éléments de commutation commandables étant rendue non conductrice simultanément en réponse à l'application simultanée auxdits éléments de commutation dudit signal impulsionnel superposé; et

des moyens de commande de rythme (109), sensibles à la tension continue fournie à la charge, pour commander le rythme de conduction de ladite multiplicité d'éléments de commutation commandables et disposés de façon à rendre conducteurs en même temps les éléments de ladite multiplicité d'éléments de commutation commandables.

# FIG. 1

DEFLECTING
COIL 11

PICTURE
TUBE

200

98 — SYNC CKT

99 — AFC/
HORIZONTAL
OSCILLATION
CKT

100 — HORIZONTAL
DRIVE CKT

101 — HORIZONTAL
OUTPUT CKT

201 — HIGH
VOLTAGE
CKT

300 — STABILIZED
POWER
SUPPLY CKT

202 — POWER
SUPPLY CKT

AC POWER
SUPPLY

6

EP 0 453 180 B1

# FIG. 2

```
  100                      101            Va   103    102   104
┌──────────────┐    ┌──────────────┐  ┌────────┐
│ HORIZONTAL   │───▶│ HORIZONTAL   │        To HIGH
│ DRIVE CKT    │    │ OUTPUT CKT   │        VOLTAGE CKT
└──────────────┘    └──────────────┘        201
```

Nb
Vb    Id ◀──
        108    107  Vf
Son
       FBT
       VDC    106

109    CONTROL CKT    DC VOLTAGE GENERATOR    105(202)

# FIG. 3                    PRIOR ART

# FIG. 4

# FIG. 5

# FIG. 6

Va

Vf1

Ve3
Vb1

Id1

Ip3

Ve3

Vf2

Vb2

Id2

Ip3

p1 p2

FIG. 7

PULSE SIGNAL GENERATING CKT — 113

103    102

Nb    S2    106

CONTROL CKT — Son

109

S1    110

112

FBT

DC VOLTAGE GENERATING CKT — 105

FIG. 8

PULSE SIGNAL GENERATING CKT — 113

103    102

Nb

CONTROL CKT    Son    D2    106

109    Q2

110

D1

112    Q1

FBT

DC VOLTAGE GENERATING CKT — 105